# EUROPEAN PATENT SPECIFICATION

(11) **EP 1 535 518 B1**
(45) Date of publication and mention of the grant of the patent: **30.12.2009**
(21) Application number: 03766639.3
(22) Date of filing: 25.07.2003
(51) Int. Cl.: A23B 4/08, A23L 1/31, A23L 1/314, A23L 1/325

(54) **ADHESIVE FOR LIVESTOCK MEAT AND SEA FOOD AND PROCESS FOR PRODUCING BONDING SHAPED FOOD WITH THE ADHESIVE**
BINDEMITTEL FÜR FLEISCH UND MEERESFRÜCHTE UND VERFAHREN ZUR ERZEUGUNG VON MIT DEM BINDEMITTEL GEFORMTEN LEBENSMITTELN
ADHESIF POUR VIANDE DE BOUCHERIE ET FRUITS DE MER, ET PROCEDE DE PRODUCTION D'ALIMENTS MIS EN FORME ET LIES AU MOYEN DE L'ADHESIF

(30) Priority: 02.08.2002 JP 2002225580
(43) Date of publication of application: 01.06.2005
(73) Proprietor: Ajinomoto Co., Inc., Tokyo 104-8315 (JP)
(72) Inventor: KANEKO, Tomoko c/o AJINOMOTO CO., INC., Kawasaki-shi, Kanagawa 210-8681 (JP); OOSUMI, Yuuichi c/o AJINOMOTO CO., INC., Chuo-ku, Tokyo 104-8315 (JP); NAKAGOSHI, Hiroyuki c/o AJINOMOTO CO., INC., Kawasaki-shi, Kanagawa 210-8681 (JP)
(74) Representative: Strehl Schübel-Hopf & Partner
(86) International application number: PCT/JP2003/009502
(87) International publication number: WO 2004/012524

(56) References cited:
- EP-A1- 0 713 651
- EP-A2- 0 572 987
- EP-A2- 0 572 987
- EP-A2- 0 948 905
- EP-A2- 1 084 621
- JP-A- 8 080 176
- JP-A- 2001 061 448
- US-A- 5 518 742
- US-A- 5 658 605
- US-A1- 2002 037 343

## Description

### Technical Field

The present invention relates to an adhesive for animal meat and fishery products for producing adhered and formed (restructured) foods by adhering food raw materials such as animal and fishery meats, and a process for producing adhered and restructured foods using the adhesive.

### Background Art

In producing adhered foods by adhering and restructuring food raw materials such as animal and fishery meats, various methods have been so far employed. Examples thereof include a method of using a protein material or thickening polysaccharides as a paste, a method of using these materials in combination with alkaline materials, and the like. However, most of these methods have been functionally insufficient in view of a food adhesive because the adhesion strength is unsatisfactory and the appearance, taste and flavor of food raw materials are notably impaired.

As a method for solving these problems, there is a method using a transglutaminase-based adhesive made of a combination of a transglutaminase as an enzyme and caseins. This method makes it possible to produce adhered and restructured foods in which the appearance, taste and flavor of food raw materials are not impaired at all.

However, a transglutaminase as a hardening agent of the transglutaminase-based adhesive is an enzyme, and the obtained adhesion strength depends on the amount of a transglutaminase, the reaction temperature and reaction time. With respect to these parameters, the use of a transglutaminase in a large amount is disadvantageous in view of the production costs, and an increase in the reaction temperature is undesirable in view of sanitary control such as maintenance of freshness in case raw materials are fresh raw materials such as animal and fishery meats. Accordingly, when a reaction is conducted with a small amount of a transglutaminase at a low temperature, it is required to take a long adhesion time. However, a long adhesion time is also problematic in view of production efficiency and sanitary control. An adhesive disclosed in JP-A-6-284867 is excellent because the practical use is possible in a reaction at 5°C for 1 hour. However, in an actual production site, a food adhesive which exhibits a higher adhesion strength in a shorter reaction time has been in demand for the purposes of further increased productivity and further improved sanitation. EP948905 discloses a process for producing noodles which uses transglutaminase and a protein. US5518742, US5658605 and EP572987 disclose an enzyme preparation for bound formed food use that comprises transglutaminase and casein. EP713651 discloses a food adhesive comprising transglutaminase and a protein.

Especially the production of adhered and restructured foods of animal and fishery products for which it is hard to employ a long reaction time because of the hygiene issue has strongly required reduction of the reaction time, especially reduction of the reaction time in a method in which an adhesive powder is applied for adhesion (hereinafter referred to as "a powder sprinkling method").

### Disclosure of the Invention

The invention is to provide a transglutaminase-containing adhesive preparation which enables stronger adhesion in a shorter reaction time than in the prior techniques without increasing the mixing amount of a transglutaminase and without impairing the appearance, taste and flavor of food rawmaterials, especially animal and fishery products.

The present inventors have found that by incorporating, in addition to a transglutaminase and a milk protein powder, a salt that shows alkalinity meeting specific conditions (hereinafter referred to as an alkaline salt), the reaction time required until practical adhesion strength is obtained is shortened and higher adhesion strength is obtained. This finding has led to the completion of the invention. Especially in the powder sprinkling method, its effect is outstanding.

The invention is an adhesive for animal and fishery products comprising a transglutaminase, a milk protein powder and a salt of which the pH of a 1% (w/w) aqueous solution is at least 10 and less than 13 and the solubility at 20°C is at least 20% (w/w) and less than 100% (w/w), wherein the salt is one or more selected from the group of sodium carbonate, trisodium phosphate and tripotassium phosphate and the average particle size of the salt is from 20 to 150 µm and particles having a size of 250 µm or less occupy 80% (w/w) or more. . Further, the invention relates to such an adhesive for animal and fishery products in which the pH of a 2% aqueous solution of the adhesive is at least 9 and less than 10.

Moreover, the invention relates to a process for producing an adhered and restructured food using the adhesive for animal and fishery products. Theinvention is described in detail below.

The alkaline salt in the invention is **characterized in that** the pH of a solution of the alkaline salt alone is high enough and the solubility thereof in water is high. The pH of the alkaline salt alone is preferably at least 10 and less than 13 in a 1% aqueous solution. Further, the solubility of the salt at 20°C is at least 20% and less than 100%. Examples of the alkaline salt that meets such conditions include sodium carbonate, trisodium phosphate, tripotassium phosphate, sodium glycinate, potassium glycinate and the like. Of these, sodium carbonate gives the highest effect to adhesion strength, and is also less costly and relatively stable so that it is easy to handle.

An alkaline salt of which the pH of a 1% aqueous solution is less than 10 or a salt whose solubility at 20°C is less than 20% is less effective for shortening the reaction time. Further, a salt of which the pH of a 1% aqueous solution is 13 or more is undesirable because the activity of a transglutaminase is unstable in the form of an adhesive powder for animal and fishery products. Examples of a salt of which the pH of a 1% aqueous solution of the salt alone is 10 or less include sodium hydrogencarbonate (bicarbonate), sodium polyphosphate and trisodium citrate, and examples of a salt of which the pH of a 1% aqueous solution of the salt alone is 13 or more include sodium hydroxide and potassium hydroxide. Examples of a salt whose solubility at 20°C is less than 20% include tetrasodium pyrophosphate and calcium oxide (calcined calcium). From these salts, no satisfactory effect can be expected as the salt of the invention.

Further, the pH of the adhesive is preferably at least 9 and less than 10 in a 2% aqueous solution (20°C). With a pH of less than 9 and a pH of 10 or more, an effect of shortening a reaction time is not found or is very low. It is thus advisable that the mixing amount of the alkaline salt is adjusted such that pH is in this range.

However, in case of using salts with a solubility at 20°C exceeding 100%, such as tetrapotassium pyrophosphate and potassium carbonate, an effect of shortening the reaction time is found when the pH of the preparation is at least 7.5 and less than 10. Accordingly, tetrapotassium pyrophosphate and potassium carbonate can be used to attain the object of the invention so long as the pH of a 2% aqueous solution of the adhesive preparation containing the same is at least 7.5 and less than 10.

When the adhesive is used in the powder sprinkling method, it is advisable that the particle size of the alkaline salt is small. Specifically, particles are preferable in which the average particle size is from 20 to 150 µm and the size of 250 µm or less occupies at least 80%. It is more preferable to use particles in which the size of 250 µm or less occupies at least 90%. The use of alkaline salts having a small particle size shortens the reaction time required for adhesion and improves the adhesion strength, and further the amount of the alkaline salts incorporated into the adhesive can be reduced. This method is especially effective when alkaline salts having a strong taste are used or it is required to less deteriorate a flavor of a material to be adhered.

Sodium carbonate is a white powder or mass. As the powder, two types, "light ash" having a small particle size and low specific gravity and "heavy ash" having a large particle size and high specific gravity are marketed, and selectively used according to the purpose. In most cases, it is heavy ash (average particle size approximately 500 µm) that is generally distributed in the market. Heavy ash is easy to handle because of lower dust, but the particle size thereof is large. Accordingly, light ash having a small particle size (average particle size is from approximately 100 to 150 µm) is preferable for the adhesive for animal and fishery products in the invention.

JP-A-6-284867 describes that a pH adjustor can be used in an adhesive. However, there is no disclosure at all suggesting a specific pH adjustor, a method for using the same and how to shorten the reaction time which has been clarified in the present invention. Further, an enzyme preparation for noodles containing a transglutaminase, a carbonate and a protein hydrolyzate has been known (JP-A-11-346689). However, this preparation is to modify noodles by generating a carbon dioxide gas. Therefore, this enzyme preparation is different from the product of the invention in problems and mechanism as well as in requirements.

The milk protein as the other effective ingredient is described below. As the milk protein powder, any of sodium caseinate, potassium caseinate, calcium caseinate and the like can be used as long as a casein protein prepared from milk is contained therein. A milk protein powder which is partially hydrolyzed by a method such as acid hydrolysis, alkali hydrolysis or enzymatic hydrolysis is also available. However, with a higher rate of hydrolysis, adhesion strength tends to decrease. The mixing ratio of the milk protein powder based on the total amount of the adhesive for animal and fishery products is preferably from 30 to 90%, more preferably from 40 to 70%. When the mixing ratio is low, no satisfactory adhesion strength is obtained. When it is too high, adhesion strength is not increased according to the mixing ratio, and a relatively expensive milk protein powder is consumed which is economically disadvantageous.

The transglutaminase used in the invention is an enzyme that catalyzes an acyl transfer reaction of a γ-carboxamide group of a glutamine residue in a peptide chain. This transglutaminase forms an ε-(γ-Glu)-Lys crosslink in and between protein molecules when an ε-amino group of a lysine residue in a protein acts as an acyl receptor. It is further an enzyme that proceeds with a reaction in which a glutamine residue is deamidated into a glutamic acid residue when water acts as an acyl receptor.

This transglutaminase includes a calcium-independent transglutaminase and a calcium-dependent transglutaminase. The former includes an enzyme derived from microorganisms (refer to, for example, JP-A-1-27471), and the latter includes an enzyme derived from the guinea pig's liver (refer to JP-B-1-50382), an enzyme derived from fish (for example, Seki Nobuo et al. "Nihon Suisan Gakkaishi" vol. 56, No. 1, p. 125 (1990)) and the like. Further, it includes an enzyme produced by gene recombination (refer to JP-A-1-300889, JP-A-5-199883, JP-A-6-225775 and the like). In the adhesive for animal and fishery products in the invention, any of these transglutaminases can be used, and the origin and the production process thereof are not limited. However, in view of functionality and economics, the calcium-independent transglutaminase is preferable. For example, the transglutaminase derived from microorganisms is optimal at present because it satisfies all of the conditions.

The mixing amount of the transglutaminase in the adhesive for animal and fishery products in the invention is from 1 to 500 units, preferably from 20 to 100 units per gram of the adhesive. When the addition amount of the transglutaminase is less than 1 unit, no satisfactory adhesion strength is obtained. When it is more than 500 units, the adhesion rate is too high which decreases handling efficiency and is also economically disadvantageous.

The activity unit of the transglutaminase is measured and defined as follows. That is, a reaction is conducted using benzyloxycarbonyl-L-glutaminylglycine and hydroxylamine as substrates, and purified hydroxamic acid is formed into an iron complex in the presence of trichloroacetic acid. Thereafter, absorbance at 525 nm is measured, and an amount of hydroxamic acid is obtained from a calibration curve to calculate the activity (refer to above-mentioned JP-A-1-27471).

The adhesive for animal and fishery products in the invention can contain, as required, seasonings such as table salt, sugar or pepper, emulsifying agents such as lecithin or monoglyceride and bulking agents such as lactose or dextrin unless the adhesion of the transglutaminase and the milk protein is impaired.

In case of conducting adhesion by the powder sprinkling method, it is more effective that silicon dioxide of fine particles is properly mixed as disclosed in JP-A-8-140594.

There is no special difficulty in preparing the adhesive for animal and fishery products in the invention by employing appropriate amounts of these ingredients, and it can be prepared by simple powder mixing. The thus-prepared adhesive can of course be used directly in adhering food raw mate rials. Needless to say, it can be distributed as a food additive.

A method for adhering a material to be adhered by the powder sprinkling method using the foregoing adhesive is described below. The powder of the adhesive is spread on a tray or the like. A material to be adhered, such as meat, is lightly put on the powder, rolled and coated well with the powder. The adhesive-coated material is restructured by being filled in a casing tube or laminated on a die box. When a gap remains between adhered surfaces, this portion is hard to adhere. It is thus advisable to adhere the materials to be adhered by pressing or the like.

This adhered and restructured product is kept at a predetermined temperature for a predetermined time depending on the purpose to proceed with a crosslinking reaction of a transglutaminase. Since the transglutaminase is an enzyme, the aforementioned predetermined temperature and time are determined in consideration of conditions under which to activate the enzyme. When the temperature is lower than 60 to 70°C at which to deactivate the transglutaminase, adhesion is conducted. The higher the temperature, the faster the adhesion strength increases. However, when animal and fishery products which are fresh food raw materials are adhered, it is advisable that they are treated at from 0 to 10°C for maintainingfreshness. The necessary reaction time varies with the reaction temperature and the type or the condition of the material to be adhered. The necessary adhesion strength is usually attained for from 5 minutes to 15 hours. Of course, when the reaction proceeds for a longer time than this range, there is no problem in adhesion strength. In the adhesive for animal and fishery products in the invention, the necessary enzyme reaction time can be, at the same enzyme amount, from 1/2 to 1/4 of that in ordinary adhesive preparations using the transglutaminase. Further, when the reaction time is long enough,a higher adhesion strength than in the past can be obtained.

The thus-adhered material can be distributed as such or after being heated or frozen. Further, it can be eaten immediately after being heated or can be distributed after being chilled or frozen. During that time, the material may be cut to an appropriate size as required. Specifically, fish is processed into sashimi (sliced raw fish), roasted fish, cooked fish, fried fish or the like, and animal meat into steak, fried meat or the like. The adhesive for animal and fishery products in the invention, like ordinary adhesives, can be used in a water-dissolving method in which the adhesive powder is dispersed or dissolved in water which is in an amount of from 2 to 10 times that of the adhesive powder, and the solution of the adhesive powder is mixed with a material to be adhered, followed by restructuring and a powder scattering method in which the adhesive powder is mixed with a material to be adhered by scattering, followed by restructuring.

Food raw materials to be adhered with the adhesive for animal and fishery products in the invention can include all of animal and plant raw materials such as animal meat (including poultry), fish meat, shells, eggs, vegetables and fruits. These can be adhered products in a state either as such, heat treated such as by boiling, roasting, steaming or grilling, treated with acid or alkali or flavored with seasonings such as salt, soy sauce, sugar or the like. In addition, two or more of these adhered products may be combined.

The invention is described more specifically by referring to Examples. However, the technical scope of the invention is not thereby limited. Further, the invention has been made to improve the reaction at a low temperature in particular. Since the reaction is further improved at room temperature or in a high temperature zone capable of activating the transglutaminase, productivity is increased or the enzyme amount is decreased when an ordinary reaction time is employed. Thus, it goes without saying that this is advantageous in view of economics.

### Best Mode for Carrying Out the Invention

The invention is described below by referring to Examples. However, the scope of the invention is not limited by the Examples.

### Example 1

Adhesives (a) to (h) for animal and fishery samples were prepared by mixing raw materials according to Table 1. As a transglutaminase, a transglutaminase (specific activity 1 unit/mg) derived from microorganisms (Streptverticillium mobaraense IFO 13819) belonging to an actinomyces of Streptverticillium (which is sometimes classified in Streptomyces) was used. As a milk protein powder, a sodium caseinate powder was used. As sodium carbonate (anhydrous), sodium carbonate (anhydrous) light ash (average particle size 120 µm, 250 µm or less 96%) manufactured by K.K. Tokuyama was used. As silicon dioxide of fine particles, Silopage #720 manufactured by Fuji Silicia Kagaku K.K. was used.

**Table 1**

| Recipe of adhesive (unit: %) | (a) | (b) | (c) | (d) | (e) | (f) | (g) | (h) |
|---|---|---|---|---|---|---|---|---|
| Transglutaminase | 5 | 5 | 5 | 5 | 5 | 5 | 5 | 5 |
| Sodium caseinate | 50 | 50 | 50 | 50 | 50 | 50 | 50 | 50 |
| silicon dioxide | 0 | 2 | 2 | 0 | 0 | 0 | 0 | 2 |
| Sodium polyphosphate | 0 | 0 | 5 | 0 | 0 | 0 | 0 | 0 |
| Tetrasodium pyrophosphate | 0 | 0 | 0 | 5 | 0 | 0 | 0 | 0 |
| Sodium carbonate (anhydrous) light ash | 0 | 0 | 0 | 0 | 5 | 0 | 0 | 5 |
| Trisodium phosphate | 0 | 0 | 0 | 0 | 0 | 5 | 0 | 0 |
| Tetrapotassium pyrophosphate | 0 | 0 | 0 | 0 | 0 | 0 | 5 | 0 |
| Lactose | 45 | 43 | 38 | 40 | 40 | 40 | 40 | 38 |
| pH (20°C) of 2% adhesive aqueous solution | 6.3 | 6.3 | 8.2 | 8.1 | 9.9 | 9.9 | 7.8 | 9.9 |
| Adhesion strength (g/cm²) Reaction time 10 min | 52 | | | | 98 | | | |
| Adhesion strength (g/cm²) Reaction time 30 min | 73 | 85 | 90 | 95 | 113 | 101 | 116 | 125 |
| Adhesion strength (g/cm²) Reaction time 60 min | 86 | | | | 119 | | | |
| Adhesion strength (g/cm²) Reaction time 120 min | 100 | 110 | 114 | | 128 | 120 | | 136 |

Each of these adhesives was spread on a tray to a thickness of approximately 5 mm. Small pieces (approximately 2 cm square) of raw pork meat (ham) were rolled thereon to uniformly adhere the adhesive thereto. These were filled in a cylindrical casing with a folded width of 75 mm, and bound while being pressed. The casing was kept at 5°C for from 10 minutes to 2 hours to cause an enzyme reaction with the transglutaminase. Then, the sample was completely frozen in a freezer of -30°C to stop the enzyme reaction. Subsequently, the sample was half-thawed, and sliced to a thickness of 9 mm. The slices were further cut to a rectangular shape 25 mm in width. They were subjected to a tensile test with a rheometer manufactured by Fudo Kogyo K.K. immediately after completely thawed. The adhesion strength was expressed in terms of tensile strength (g/cm²). Moreover, pH of a 2% aqueous solution of each adhesive was measured by using a pH meter. In the preparation of the 2% aqueous solution of the adhesive, the adhesive powder was added to water, and the mixture was stirred for 5 minutes, after which the pH at a water temperature of 20°C was measured. The results are shown in Table 1.

The adhesives for animal and fishery samples, containing sodium carbonate, trisodium phosphate and tetrapotassium pyrophosphate needed shorter time for adhesion than (a), (b), (c) and (d) obtained by the ordinary method to increase the adhesion strength. Further, the combined use of fine silicon dioxide (h) showed higher adhesion strength.

The adhered sample of ham which had been obtained by an adhesion treatment with each of the adhesives (a) to (h) for a reaction time of 30 minutes was sliced to a steak having a thickness of from 10 to 12 mm. Both surfaces thereof were roasted on a hot plate at approximately 200°C for 2 minutes each, and the sample was pulled by hand for the comparison of the adhesive strength. Consequently, the meats treated with (e), (f), (g) and (h) were adhered with sufficient adhesion strength in handling. However, the adhered meats treated with (a), (b), (c) and (d) were easy to collapse, and the adhesion strength was unsatisfactory. All of the adhered meats kept a flavor and a mouthfeel equal to those of non-adhered meat in which the taste and flavor inherent in meat were not impaired at all.

### Example 2

4.5% of the same transglutaminase (specific activity 1 unit/mg) derived from microorganisms as used in Example 1, 50% of a sodium caseinate powder and 2% of fine silicon dioxide were mixed with from 1 to 10% of sodium carbonate (anhydrous) different in particle size and a maltitol syrup powder as the remainder such that the total became 100%. Twelve types of adhesives for animal and fishery samples were thus prepared, and an adhered sample of ham was prepared in the same manner as in Example 1 using the same. By the way, the sodium carbonate used was light ash (average particle size 120 µm, 250 µm or less 96%) and heavy ash (average particle size 500 µm, 250 µm or less 6%) manufactured by K.K. Tokuyama. The reaction was conducted at 5°C for 30 minutes. After completion of the reaction, the sample was completely frozen in a freezer of -30°C. In the same manner as in Example 1, half-thawing and slicing wereconducted, and a tensile test was conducted with the rheometer to measure adhesion strength. pH of a 2% aqueous solution of each adhesive was measured as in Example 1. The results are shown in Table 2. When the mixing amount of sodium carbonate (anhydrous) was from 2 to 5% in which the pH of the 2% adhesive aqueous solution was from 9 to 10, especially high adhesion strength was obtained, and light ash having a small particle size gave higher adhesion strength in a small mixing amount.

**Table 2**

| Mixing amount (%) of sodium carbonate (anhydrous) | pH of a 2% aqueous solution (20°C) | Tensile strength (g/cm²) | |
|---|---|---|---|
| | | Adhesive using light ash | Adhesive using heavy ash |
| 0 | 6.3 | 87 | 87 |
| 1 | 7.6 | 102 | 91 |
| 2 | 9.0 | 110 | 95 |
| 2.5 | 9.3 | 125 | 104 |
| 3 | 9.6 | 118 | 107 |
| 5 | 9.9 | 107 | 115 |
| 10 | 10.4 | 97 | 90 |

### Example 3

A cutlass fish was cut to three parts, and the bone was removed to obtain slices (approximately 5 cm x 10 cm). The preparation (c), (e) or (h) obtained in Example 1 was coated on the bowel sides thereof. The bowel sides of the two slices were adhered, and covered with a wrap. The sample was kept at 5°C for 2 hours to proceed with an enzyme reaction by a transglutaminase. The resulting sample was completely frozen in a freezer of -30°C to stop the enzyme reaction. Subsequently, the sample was thawed. Immediately after the sample was completely thawed, a peeling test was performed by ten expert panels. The adhesion strength was manually evaluated, and the average value was obtained. In the evaluation, "strongly adhered" scored 10, "tentatively adhered but easily separated by pulling" scored 5, and "not adhered at all" scored 1.

Consequently, (c) was evaluated as 5.5, (e) as 6.7 and (h) as 7.1 respectively. Further, the samples were eaten by being properly roasted on a hot plate of 200°C. As a result, all of the samples kept a flavor and a mouthfeel equal to those of a non-adhered slice of a cutlass in which the taste and flavor inherent in fish were not impaired at all.

### Industrial Applicability

The invention has enabled a higher adhesion strength to be exhibited in a shorter reaction time than in the prior art with respect to the adhesion of foods using the enzyme-containing adhesive comprising the combination of the transglutaminase, the milk protein powder and the specific alkaline salt.

## Claims

1. An adhesive for animal and fishery products comprising a transglutaminase, a milk protein powder and a salt of which the pH of a 1% (w/w) aqueous solution is at least 10 and less than 13 and the solubility at 20°C is at least 20% (w/w) and less than 100% (w/w), wherein the salt is one or more selected from the group of sodium carbonate, trisodium phosphate and tripotassium phosphate and the average particle size of the salt is from 20 to 150 µm and particles having a size of 250 µm or less occupy 80% (w/w) or more.

2. The adhesive for animal and fishery products according to claim 1, wherein the pH of a 2% aqueous solution of the adhesive is at least 9 and less than 10.

3. An adhesive for animal and fishery products comprising a transglutaminase, a milk protein powder and a salt of which the pH of a 1% (w/w) aqueous solution is at least 10 and less than 13 and the solubility at 20°C is at least 100% (w/w), the pH of a 2% (w/w) aqueous solution of the adhesive being at least 7.5 and less than 10, wherein the salt is one or more selected from potassium carbonate and tetrapotassium pyrophosphate and the average particle size of the salt is from 20 to 150 µm and particles having a size of 250 µm or less occupy 80 % (w/w) or more.

4. A process for producing an adhered and restructured food by using the adhesive for animal and fishery products according to claims 1 to 3.

## Patentansprüche

1. Bindemittel für Tier- und Fischprodukte, welches eine Transglutaminase, ein Milchproteinpulver und ein Salz enthält, dessen pH-Wert einer 1 %igen (Gew./Gew.) wässerigen Lösung mindestens 10 und weniger als 13 ist und dessen Löslichkeit bei 20°C mindestens 20 % (Gew./Gew.) und weniger als 100 % (Gew./Gew.) ist, wobei das Salz ein oder mehrere Salze ist, ausgewählt aus der aus Natriumcarbonat, Trinatriumphosphat und Trikaliumphosphat bestehenden Gruppe, und die mittlere Teilchengröße des Salzes 20 bis 150 µm ist und Teilchen mit einer Größe von 250 µm oder weniger 80 % (Gew./Gew.) oder mehr ausmachen.

2. Bindemittel für Tier- und Fischprodukte nach Anspruch 1, wobei der pH-Wert einer 2 %igen wässerigen Lösung des Bindemittels mindestens 9 und weniger als 10 ist.

3. Bindemittel für Tier- und Fischprodukte, welches eine Transglutaminase, ein Milchproteinpulver und ein Salz enthält, dessen pH-Wert einer 1 %igen (Gew./Gew.) wässerigen Lösung mindestens 10 und weniger als 13 ist und dessen Löslichkeit bei 20°C mindestens 100 % (Gew./Gew.) ist, der pH-Wert einer 2 %igen (Gew./Gew.) wässerigen Lösung des Bindemittels mindestens 7,5 und weniger als 10 ist, wobei das Salz mindestens ein unter Kaliumcarbonat und Tetrakaliumpyrophosphat ausgewähltes Salz ist und die mittlere Teilchengröße des Salzes 20 bis 150 µm ist und Teilchen mit einer Größe von 250 µm oder weniger 80 % (Gew./Gew.) oder mehr ausmachen.

4. Verfahren zur Herstellung eines gebundenen und restrukturierten Lebensmittels unter Verwendung des Bindemittels für Tier- und Fischprodukte nach den Ansprüchen 1 bis 3.

## Revendications

1. Adhésif pour produits animaux et de pêcherie, comprenant une transglutaminase, une poudre de protéines du lait et un sel dont le pH d'une solution aqueuse de 1 % (p/p) est d'au moins 10 et de moins de 13 et la solubilité à 20°C est d'au moins 20 % (p/p) et de moins de 100 % (p/p), où le sel est un élément ou plus sélectionné dans le groupe constitué du carbonate de sodium, du phosphate de trisodium et du phosphate de tripotassium et la dimension particulaire moyenne du sel est de 20 à 150 µm et les particules ayant une dimension de 250 µm ou moins occupent 80 % (p/p) ou plus.

2. Adhésif pour produits animaux et de pêcherie selon la revendication 1, où le pH d'une solution aqueuse à 2 % de l'adhésif est d'au moins 9 et de moins de 10.

3. Adhésif pour produits animaux et de pêcherie comprenant une transglutaminase, une poudre de protéines du lait et un sel dont le pH d'une solution aqueuse à 1 % (p/p) est d'au moins 10 et de moins de 13 et la solubilité à 20°C est d'au moins 100 % (p/p), le pH d'une solution aqueuse à 2 % (p/p) de l'adhésif étant d'au moins 7,5 et de moins de 10, où le sel est un élément ou plus sélectionné parmi le carbonate de potassium et le pyrophosphate de tétrapotassium et la dimension particulaire moyenne du sel est de 20 à 150 µm et les particules ayant une dimension de 250 µm ou moins occupent 80 % (p/p) ou plus.

4. Procédé de production d'un aliment collé et restructuré par utilisation de l'adhésif pour produits animaux et de pêcherie selon les revendications 1 à 3.
